Europäisches Patentamt

European Patent Office

Office européen des brevets

(19)

(11) **EP 1 156 012 A1**

(12) **EUROPEAN PATENT APPLICATION**

(43) Date of publication:
   **21.11.2001 Bulletin 2001/47**

(51) Int Cl.[7]: **C01B 17/00**, C01B 17/02,
   C01B 17/16, C01C 3/00,
   B01J 8/00, C01B 17/04

(21) Application number: **01111956.7**

(22) Date of filing: **14.04.1993**

(84) Designated Contracting States:
   **BE DE ES FR GB IT NL**

(30) Priority: **15.04.1992  US 868432**
   **04.05.1992  US 877936**

(62) Document number(s) of the earlier application(s) in
   accordance with Art. 76 EPC:
   **93910604.3 / 0 636 107**

(71) Applicant: **EXXONMOBIL OIL CORPORATION**
   **Fairfax, VA 22037-0001 (US)**

(72) Inventors:
   • **Buchanan, John Scott**
     **Mercerville, New Jersey 08619 (US)**
   • **Iyengar, Jagannathan Nambi**
     **Chester, New Jersey 07930-9741 (US)**

   • **Sodomin, Joseph Frank**
     **Centreville, Virginia 22020 (US)**
   • **Stern, David Lawrence**
     **Princeton, New Jersey 08540 (US)**
   • **Teitman, Gerald Joseph**
     **Vienne, Virginia 22180 (US)**

(74) Representative: **Jones, Helen Marjorie Meredith**
   **Gill Jennings & Every,**
   **Broadgate House,**
   **7 Eldon Street**
   **London EC2M 7LH (GB)**

Remarks:
   This application was filed on 21 - 05 - 2001 as a
   divisional application to the application mentioned
   under INID code 62.

(54) **Process and apparatus for recovering sulphur from a gas stream containing hydrogen sulphide**

(57)    A method and apparatus for removing sulphur from a gas stream containing at least one sulphur compound, comprising combusting said gas stream with an oxygen containing gas in an incinerator (10) to convert the or each sulphur compound to at least one sulphur oxide. A gas stream is then withdrawn from the incinerator, which contains the or each sulphur oxide. The sulphur oxide containing gas stream is then directed to an absorber (12) having an absorbent bed adapted to remove sulphur compounds. The absorbent bed is then contacted with a hydrogen and/or hydrocarbon containing stream to regenerate said absorbent bed by reducing the sulphur compounds absorbed in said absorbent bed to hydrogen sulphide and/or sulphur dioxide, and thereby forming off gas stream containing hydrogen sulphide and/or sulphur dioxide. Finally, sulphur is recovered from said hydrogen sulphide and/or sulphur dioxide bearing stream. The sulphur can be recovered by a Claus sulphur recovery process (16). The hydrogen sulphide containing gas stream can be ammonia acid gas stream, thereby causing $N_2$ to be formed in the incinerator. The $N_2$ is not absorbed in the absorbent bed.

EP 1 156 012 A1

**Description**

The present invention relates to a process and apparatus for recovering sulphur from a gas stream containing hydrogen sulphide. There are two particular embodiments:

one in which ammonia acid gases containing hydrogen sulphide are desulphurized; and,
the other in which an exhaust gas from a Claus unit is desulphurized.

The process also works on other sulphur-containing gas streams, e.g., light, saturated hydrocarbons, hydrogen or carbon monoxide gas streams containing $H_2S$ and/or sulphur oxides.

Refinery streams are typically desulphurized by the Claus process wherein elemental sulphur is produced by reacting hydrogen sulphide and sulphur dioxide in the presence of a catalyst. The Claus system uses a combustion chamber which, at 950°C to 1,350°C (1742°F- 2462°F), converts 50 to 70% of sulphur contained in the feed gas into elemental sulphur. Sulphur is condensed by cooling the reaction gas to a temperature below the dew point of sulphur after which the remaining gas is heated and further reacted over a catalyst. Normally, the gas passes through at least two such Claus catalyst stages.

The different stages of the process may be represented by the following equations:

$$H_2S + 3/2\ O_2 \rightarrow SO_2 + H_2O \qquad\qquad I$$

$$2\ H_2S + SO_2 \rightarrow 3S + 2H_2O \qquad\qquad II$$

The overall reaction is:

$$3\ H_2S + 3O_2 \rightarrow 3S + 3H_2O \qquad\qquad III$$

The final Claus exhaust gas still contains small amounts of $H_2S$, $SO_2$, $CS_2$, carbon oxysulphide, CO, and elemental sulphur in the form of a vapour or mist. The exhaust gas generally is subjected to post-combustion to convert substantially everything to $SO_2$ and then further purified by Claus after-treatments.

Sulphur emitted as sulphur oxides ("$SO_x$") into the atmosphere with the exhaust gas may amount to 2-6% of the sulphur contained in the feed gas in the form of $H_2S$. In view of air pollution and the loss of sulphur involved, further purification is imperative.

Claus aftertreatments have been developed. These are carried out after the last Claus stage or after the post-combustion. These aftertreatments are, however, complicated and expensive or inadequate.

One aftertreatment, carried out before postcombustion, seeks to achieve by catalytic conversion as complete a reaction as possible between $H_2S$ and $SO_2$ The reaction temperature is lowered to below the condensation point of sulphur, whereby the reaction equilibrium corresponding to equation II is shifted to form sulphur. A distinction is made between dry processes using alternating reactors in which the catalyst is intermittently charged with sulphur and discharged, and processes where $H_2S$ and $SO_2$ react in a high-boiling catalyst-containing liquid to form elemental sulphur which is drawn off continuously as a liquid product.

Unfortunately, in these processes any deviation from the optimum $H_2S:SO_2$ ratio in the Claus exhaust gas results in a reduced sulphur yield. No appreciable conversion of sulphur compounds such as COS and $CS_2$ occurs. Sulphur recovery efficiency of Claus using this form of aftertreatment is limited to 98-99%. Cyclic operation, with alternating reactors, requires at least two reactors and much valves and piping.

A second aftertreatment catalytically hydrogenates $SO_2$ and S with $H_2$ and CO while COS and $CS_2$ are simultaneously hydrolyzed with $H_2O$ into $H_2S$ which can be treated conventionally.

Hydrogenation/hydrolysis does not require a stoichiometric $H_2S/SO_2$ ratio in the Claus exhaust gas.

It almost completely converts COS and $CS_2$ so that sulphur yields of more than 99.8% can eventually be obtained.

This process incurs high capital expenditures for elaborate apparatus. It also consumes substantial energy. Recycle of $H_2S$ reduces the Claus system capacity, while the production of waste water containing harmful constituents presents additional problems. In addition, the treatment (such as amine absorption) used to remove $H_2S$ is generally ineffective for removing unconverted COS and $CS_2$. Total emissions of reduced sulphur species are typically around 10 ppm by volume with this after treatment.

A third aftertreatment oxidizes all sulphur compounds into $SO_x$ which is then further processed.

These processes are downstream of the post-combustion and therefore independent of the mode in which the Claus system is run. There are also dry processes, where $SO_2$ is adsorbed and returned to the Claus unit or processed to form sulphuric acid, and wet processes, where $SO_2$ is removed by absorptive scrubbing and further processed.

For complete oxidation of COS and $CS_2$ into $SO_2$, the energy requirements are high and following the aftercombustion, very large exhaust gas flows have to be treated.

The equilibrium conversion of the Claus reaction (equation II) may be improved by condensing out part of the water in the gas. The gas is then reheated and charged to another Claus stage to form elemental sulphur. This produces waste water which is highly corrosive due to the formation of thiosulphuric acid, polythionic acids and sulphurous acid. Processing of such waste water is expensive. Unavoidable formation of deposits of elemental sulphur also occurs during $H_2O$ condensation. Moreover, there is no conversion of COS and $CS_2$ so the maximum recovery of sulphur is about 98%.

As a result of these disadvantages, this process has not been used on a commercial scale.

Where the aftertreatment involves conversion of all sulphur compounds into hydrogen sulphide, it is also known to oxidize part of said hydrogen sulphide with air into $SO_2$ or to convert part of the sulphur produced into sulphur dioxide and thereafter catalytically to convert the remaining hydrogen sulphide with sulphur dioxide at 125°C - 150°C in fixed-bed reactors into sulphur. The sulphur loaded catalyst is regenerated by passing hot oxygen-free gases containing hydrogen sulphide through the catalyst. This avoids the disadvantages associated with the first type of aftertreatment, such as dependence on $H_2S/SO_2$ ratio and $COS/CS_2$ content in the Claus exhaust gas. Disadvantages of this process are the high capital cost and the higher $H_2O + SO_2$ input concentration for the low-temperature reactor caused by the admixture of a separately produced flow of $SO_2$ The maximum conversion overall efficiency obtainable with this process approaches 99%.

An aftertreatment process which oxidizes all sulphur compounds into $SO_2$ is exemplified in US-A-3764665. This patent disclosed a process for removing sulphur oxides from gas mixtures with a solid acceptor for sulphur oxides wherein the solid acceptor is regenerated with a steam-diluted reducing gas and the regeneration off-gas is fed to a Claus sulphur recovery process. The improvement comprises cooling the regeneration off-gas to condense the water vapour contained therein, contacting the cooled off-gas with a sulphur dioxide-selective liquid absorbent, passing the fat liquid absorbent to a buffer zone and then to a stripping zone wherein the absorbed $SO_2$ is recovered from the liquid absorbent and is supplied to the sulphur recovery process. By operating in this manner, fluctuations in the sulphur dioxide concentration of the regeneration off-gas were levelled-out and a relatively concentrated sulphur dioxide stream was supplied to the sulphur recovery process at a substantially constant rate.

Although this process supplies relatively concentrated sulphur dioxide to the sulphur recovery process at a substantially constant rate, the off-gas must be cooled and the fat liquid absorbent must be transferred to a buffer zone before the absorbed $SO_2$ can be stripped. Therefore, what is needed is a simpler process whereby these steps are eliminated and energy costs reduced.

Ammonia acid gases typically are combusted substoichiometrically at about 2300°F (1260°C) at the front of the sulphur plant combustion chamber to completely destroy the ammonia. A portion of a clean acid gas (ammonia free) is also introduced along with the ammonia acid gas to control the temperature. The processing of the ammonia acid gas in the combustion chamber increases the sulphur plant size due to the increase in volume of the gases that need to be processed by the sulphur plant. For example, processing of ammonia may increase the hydraulic size of the plant by 20 to 50% based on the amount of ammonia acid gas that is processed.

Further, ammonia that is not destroyed in the combustion chamber will form salts. Ammonia and sulphur dioxide react to form a very dense white smog of ammonium hydrosulphide. Ammonia in significant concentration of $CO_2$ will form ammonium bicarbonates. These salts will lay down to plug sulphur seal legs, sulphur condensers, heat exchangers and reactor beds. This salt problem reduces the reliability of the sulphur plant.

According to one aspect of the invention there is provided a method of removing sulphur from a gas stream containing at least one sulphur compound, comprising the steps of:

(a) combusting said gas stream with an oxygen containing gas in an incinerator to convert the or each sulphur compound to at least one sulphur oxide;
(b) withdrawing from the incinerator a gas stream containing the or each sulphur oxide, and directing said sulphur oxide containing gas stream to an absorber having an absorbent bed adapted to remove sulphur compounds;
(c) contacting said absorbent bed with a hydrogen and/or hydrocarbon containing stream to regenerate said absorbent bed by reducing the sulphur compounds absorbed in said absorbent bed to hydrogen sulphide and/or sulphur dioxide, and thereby forming an off gas stream containing hydrogen sulphide and/or sulphur dioxide; and,
(d) recovering sulphur from said hydrogen sulphide and/or sulphur dioxide bearing stream.

In one construction, the absorbent bed is provided in at least two fixed-bed reactors, and sulphur oxide containing gas stream from the incinerator is fed to a first one of said reactors until the bed therein is spent absorbed sulphur compounds;

thereafter said sulphur oxide containing gas stream is fed to a second one of said reactors; and,
said hydrogen and/or hydrocarbon bearing gas stream is fed to said first one of said reactors to form said off gas stream and thus regenerate said first one of said reactors.

Preferably said sulphur oxide containing gas stream and said hydrogen and/or hydrocarbon bearing gas stream are alternately fed to each one of said reactors, whereby each bed is first spent with said absorbed sulphur compounds, and then regenerated by said hydrogen and/or hydrocarbon bearing stream to form said off gas stream.

In another construction said absorbent bed is in a fluidized bed system comprising a reactor, a regenerator, a conduit for feeding spent absorbent from the reactor to the regenerator, and another conduit for passing regenerated absorbent from the regenerator to the reactor; and,

wherein said sulphur oxide containing gas stream from the incinerator is fed to the reactor to absorb said sulphur oxide on the absorbent, and said hydrogen and/or hydrocarbon bearing stream is fed to the regenerator to reduce said absorbed sulphur compounds to said off gas stream.

The absorbent bed may comprise a fixed bed solid absorbent or a granulated moving bed solid absorbent.

The absorbent is preferably a metal oxide, or a mixture of metal oxides, impregnated with a promoter:

the metal oxide is preferably alumina, while the promoter is preferably a rare earth. Most preferably the promoter is $CeO_2$ and/or Pt. The absorbent may comprise Mg/Al spinels. 11, preferably a magnesium-aluminum-containing spinel impregnated with vanadium and cerium.

The absorbent may be magnesium aluminate impregnated with an oxygen promoter.

The off gas stream is desirably directed to a Claus sulphur recovery process where the sulphur compounds are converted to elemental sulphur.

The absorbent may be reconstituted in the presence of water into a form which is active for further absorption of sulphur oxides. The absorbent may increase in weight from substantially 10 to substantially 60 wt. % due to absorbed sulphur oxides.

Preferably, greater than 70 vol. % of sulphur in the off gas stream is in the form of sulphur dioxide.

The gas stream containing sulphur compounds which is fed to the incinerator may contain carbon monoxide, and preferably greater than substantially 90 vol. % of said carbon monoxide is converted to carbon dioxide.

The oxygen containing stream (which may be, for example, pure oxygen or air) preferably contains sufficient oxygen such that when it is introduced into the incinerator an oxygen content of substantially 0.10 to substantially 10 vol. % is maintained in gases issuing from the incinerator.

The pressure in said absorber is preferably in the range of substantially 0.1 to substantially 10 atmospheres (10 to 1000 kPa), more preferably substantially 1 to substantially 2 atmospheres (100 to 200 Kpa), The absorber is preferably operated at a temperature of from substantially 900°F (482°C) to substantially 1,400°F (760°C), more preferably substantially 1,100°F (593°C) to substantially 1,350°F (732°C). The absorber is preferably operated at a GHSV (gas hourly space velocity) of substantially 500 to substantially 50,000, more preferably substantially 2,000 to substantially 5,000.

The incinerator is operated at a temperature of substantially 900 °F (482°C) to substantially 1,350°F (732°C), a pressure of substantially 1 atmosphere (100 Kpa), and a GHSV of substantially 2,000 to substantially 5,000.

In one particularly preferred embodiment the absorber is operated at a temperature of substantially 1,100°F (593°C) to substantially 1,300°F (704°C), a gas hourly space velocity (GHSV) of substantially 2,000 to substantially 5,000, a pressure of substantially 0.5 to substantially 3 atmospheres (50 to 300 Kpa), and oxygen in an amount of about 2 to about 5 vol % in the presence of a ceria/alumina absorbent.

In a particular embodiment of the invention the gas stream containing sulphur compounds which is fed to the incinerator is an ammonia acid gas stream;

in the incinerator the ammonia is combusted to form $N_2$ SO that the gas stream withdrawn from the incinerator also contains $N_2$; and,
the gas stream fed to the absorbent bed leaves the said bed in the form of a nitrogen bearing stream.

Preferably the ammonia acid gas stream is combusted in the incinerator at a temperature of from substantially 1500°F (816°C) to substantially 2500°F (1371°C):

this combustion desirably takes place with fuel gas.

The ammonia acid gas stream may be stoichiometrically combusted;

or it may be combusted with excess air or oxygen.

An oxygen containing gas can be added to said nitrogen and sulphur oxide containing gas stream withdrawn from the incinerator.

The nitrogen and sulphur oxide containing gas stream contacting said solid absorbent bed preferably has an oxygen content of from substantially 0.10 vol% to substantially 10 vol%, more preferably 2 vol% to 4 vol%.

The absorbent bed while absorbing the sulphur oxides thereon is preferably operated at a GHSV substantially 500 to substantially 20,000, a pressure of from substantially 0.1 atm to substantially 10 atm (10 to 1000 Kpa), and a temperature of from substantially 900°F (482°C) to substantially 1400 °F (760°C). More preferably the GHSV is from substantially 3,000 to substantially 5,000, the temperature is from about 1,100°F (593°C) to substantially 1,300°F (704°C), and the pressure is from substantially 1.5 to substantially 3.0 atm (150 to 300 Kpa).

The absorbent bed while being regenerated is preferably operated at a temperature of from substantially 900°F (482°C to substantially 1400°F (760° C), at a pressure of from substantially 0.10 to substantially 10 atm (10 to 1000 Kpa), and a gas hourly space velocity of substantially 10 to substantially 1,000. More preferably the temperature is from about 1,100°F (593°C) to about 1,300° F (704°C), the pressure is from substantially 0.5 atm to substantially 3.0 atm (50 to 300 Kpa), and the GHSV is from substantially 100 to substantially 150.

The nitrogen and sulphur oxide containing stream withdrawn from the incinerator may be passed through a heat exchanger and to a condenser for reducing the temperature of said enriched stream to from substantially 250°F (121°C) to substantially 300°F (149°C) to condense elemental sulphur out of said withdrawn stream as a liquid sulphur stream;

thereafter said withdrawn stream may be looped back through said heat exchanger to be reheated to from substantially 900°F (482°C) to substantially 1,400°F (760°C) for contacting said solid absorbent bed.

The nitrogen bearing stream from said absorber is fed to an incinerator or is vented.

According to another aspect of the invention there is provide apparatus for removing sulphur from a gas stream containing at least one sulphur compound, comprising:

(a) an incinerator for combusting said gas stream with an oxygen containing gas to convert the or each sulphur compound to at least one sulphur oxide;
(b) means for contacting a sulphur oxide containing gas withdrawn from the incinerator with an absorbent bed adapted to remove sulphur compounds from a sulphur oxide containing gas stream withdrawn from the incinerator;
(c) means for regenerating said absorbent bed by contacting it with a hydrogen and/or hydrocarbon containing stream, whereby the sulphur compounds absorbed in said absorbent bed are reduced to hydrogen sulphide and/or sulphur dioxide, thereby forming an off gas stream containing hydrogen sulphide and/or sulphur dioxide; and,
(d) means to recovering sulphur from said hydrogen sulphide and/or sulphur dioxide bearing stream.

The means for recovering sulphur comprises a Claus sulphur recovery apparatus.

In one embodiment the gas stream containing hydrogen sulphide is an ammonia acid gas stream, whereby $N_2$ is also formed in the incinerator, and the absorbent bed is adapted not to absorb the $N_2$ formed in the incinerator.

The combusting means preferably operates at a temperature of from substantially 1500°F (816°C) to substantially 2500°F (1371°C).

Means for supplying fuel gas to said combusting means may also be provided.

In one construction the contacting means and the regenerating means comprises at least two fixed-bed reactors, each bed being formed of said absorbent. The apparatus further comprises switching means (1) for feeding said sulphur oxide containing gas stream withdrawn from the incinerator to a first one of said reactors until the bed therein is spent with absorbed sulphur compounds, and thereafter (2) for feeding said sulphur oxide containing gas stream to a second one of said reactors while feeding said hydrogen and/or hydrocarbon bearing gas stream to said first one of said reactors to form said off gas stream and thus regenerate said first one of said reactors.

In another construction said contacting means comprises a reactor, and said absorbent bed regeneration means comprises a regenerator. The apparatus further comprises means for continuously feeding a fluidized bed of spent absorbent from the reactor to the regenerator, and for passing a fluidized bed of regenerated absorbent from the regenerator to the reactor;

whereby said sulphur oxide containing gas stream from the incinerator is fed to said absorbent in the reactor for absorbing said sulphur oxide, and means for feeding said hydrogen and/or hydrocarbon bearing stream to the regenerator to reduce absorbed sulphur compounds to hydrogen sulphide and/or sulphur dioxide, and thus form said off gas stream.

Reference is now made to the accompanying drawings, in which:

Fig. 1 is a schematic representation of a desulphurization process according to a first embodiment of the invention, wherein a moving solid bed absorbent is utilized;
Fig. 2 is a schematic representation of a desulphurization process according to a first embodiment of the invention, wherein a fixed solid bed absorbent is utilized;
Fig. 3 is a schematic flow diagram of a desulphurization process according to a second embodiment of the invention, wherein a fixed-bed system for recovering sulphur from ammonia acid gas is employed;
Fig. 4 is a schematic flow diagram illustrating a modification of the embodiment shown in figure 3; and,
Fig. 5 is a schematic flow diagram of a desulphurization process according to the second embodiment of the invention, wherein a fluidized bed system is employed.

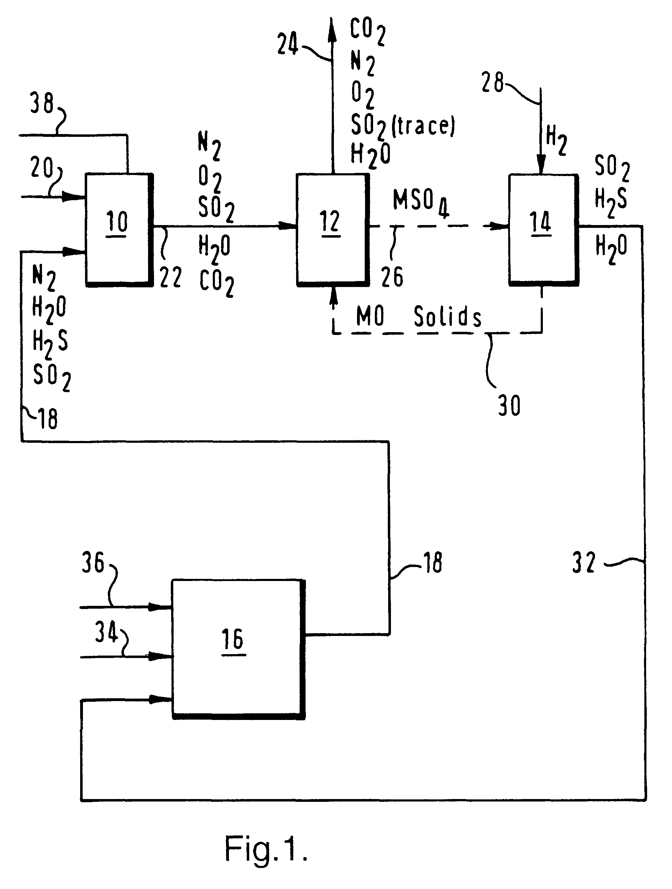

Referring to Fig. 1, exhaust or tail-gas from a Claus recovery process 16 is directed into an incinerator 10 via tail-gas conduit 18. This tail-gas is obtained from the Claus sulphur recovery process 16 by combining air via conduit 34 with an acid gas from acid gas conduit 36 into a Claus sulphur recovery process 16. A process for the reduction of the sulphur content in a gaseous stream wherein a Claus sulphur recovery process or unit is utilized is disclosed in US-A-4857297. Tail-gas which enters incinerator 10 contains sulphur dioxide, hydrogen sulphide, water, and nitrogen plus minor amounts of COS, $NH_3$, nitrogen oxides, carbon monoxide, and carbon dioxide. Sulphur dioxide and hydrogen sulphide contained in the tail-gas is in a concentration too low to be removed by a Claus process.

The concentration is also too high for emission into the atmosphere. Air is directed into incinerator 10 via substantially removed, are emitted from absorber 12 via absorbent exit gas conduit 24.

The gas which is removed by conduit 24 contains water, traces of sulphur dioxide, oxygen and nitrogen.

This emitted gas contains sulphur dioxide in an amount less than about 2 ppm. Nitrous oxides contained in this gas can be reduced by co-feeding ammonia or an ammoniaproducing species such as urea into absorber 12.

Although a moving bed of absorbent may be used to remove the sulphur dioxide, it is preferred to contain the solid absorbent in a fixed bed.

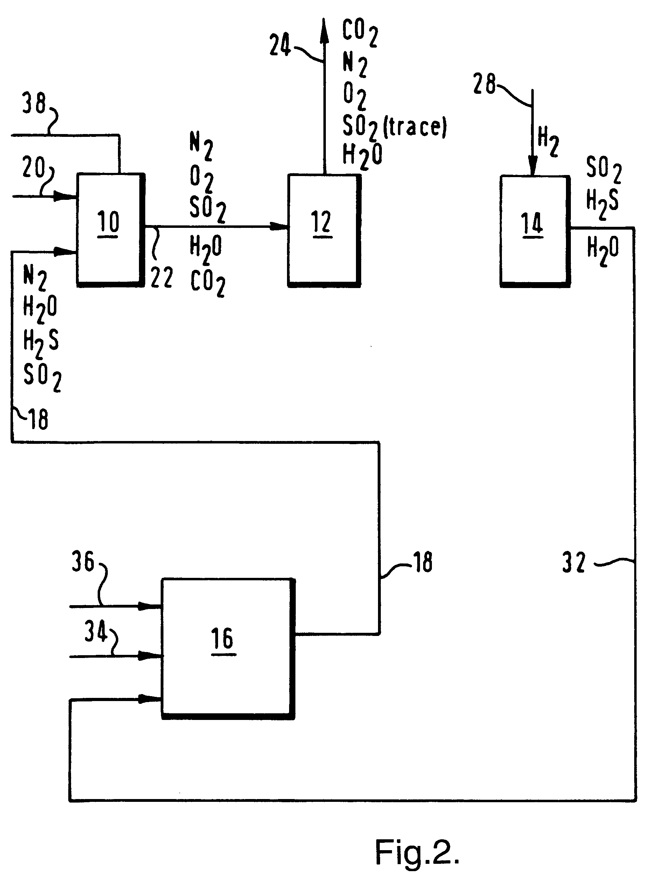

To accomplish this, a common vessel is used for both tail-gas absorption and also for absorbent regeneration. This is accomplished by appropriate valving so as to allow the flow of oxidized incinerator gas to the absorber to cease. Subsequently, the reducing gas is directed into the vessel and the regeneration stage is initiated. For continuity of operation, this is best accomplished by having two separate sets of vessels for both absorption and regeneration. As will be understood by those skilled in the art, when the absorbent is in a fixed bed embodiment, the atmosphere is merely swung from tail-gas (absorption) to reducing gas (regeneration) by appropriate valving. Greater specificity is obtained for the fixed bed method by reference to Fig. 2.

As is shown in Fig. 2, the fixed bed method is similar to and follows the basic operating scheme as depicted in Figure 1 which scheme is discussed above.

The fixed bed method is better suited for those applications where less than about 4 psi (28 Kpa) of excess pressure drop is available. In most applications where the fuel gas is obtained from a Claus sulphur plant, the pressure drop will often be less than 4 psi (28kPa).

Although the fixed bed method is preferred for these applications, the fluidized bed is useful when incinerator air conduit 20.

Incinerator 10 is operated at a temperature sufficient to convert the hydrogen sulphide gas into sulphur oxides. This temperature will be about 900°F (482°C) to about 1,350°F (732°C). The preferred temperature is about 1,200°F (649°C). After the oxidized tail-gas has been in incinerator 10 for a time sufficient to convert substantially all of the hydrogen sulphide to sulphur oxides, it is directed from incinerator 10 to absorber 12 via incinerator exit gas conduit 22. The gas which exits incinerator 22 contains water, sulphur oxides, oxygen, carbon dioxide, and nitrogen.

When gas exiting incinerator 10 enters absorber 12, it is contacted with the solid absorbent which absorbs substantially all of the sulphur oxides. The sulphur oxide-capturing absorbent can be in the form of balls, pebbles, spheres, extrudates, channelled monoliths, microspheres or pellets. This sulphur oxide-capturing absorbent provides absorbers or acceptors which absorb, and collect, or otherwise remove sulphur oxides from the incoming gaseous stream. In the most preferred embodiment, the bed of granular material is a bed of sulphur-oxide capturing absorbents, which serve as sulphur oxide absorbers or acceptors. In the moving bed embodiment shown on Fig. 1 the absorbent is removed from absorber 12 by gravity. It moves by gravity since the absorbent is positioned in absorber 12 at an angle that causes it to move at a rate so as to allow maximum absorption of sulphur oxides. The flow rate of the solid absorbent through absorber 12 is such as to allow the absorption of about 10 to about 60 weight % of sulphur oxides on the absorbent, most preferably about 20 to about 60 weight %. Once sufficient sulphur oxides have been absorbed by the absorbent, it flows by gravity from absorbent 12 via spent absorbent conduit 26 into regenerator 14. Gases, from which the sulphur has been sufficient driving pressure is available, because of its continuous operation capability and also because less hardware is required, i.e. fewer valves and pipes.

Referring now to Fig. 2, gas from incinerator 10 enters absorber 12 where it is contacted with the solid absorbent that absorbs substantially all of the sulphur oxides. The sulphur oxide-capturing absorbent, as mentioned above, can be in the form of balls, pebbles, spheres, pellets, extrudates, channel monoliths, or microspheres. These oxide-capturing absorbents absorb and collect, or otherwise remove substantially all of the sulphur oxides from the gases coming into absorber 12. Gases, from which sulphur oxides have been substantially removed, are emitted from absorber 12 via spent absorbent exit conduit 24. Those gases that exit absorber 12 via conduit 24 are monitored until sulphur oxide "break through" occurs. Sulphur dioxide concentration is monitored with an ultraviolet or infrared analyzer. Of course, as will be understood by those skilled in the art, other comparable analyzing equipment can be utilized.

Sulphur dioxide "break through" occurs when a substantial increase in the concentration of sulphur dioxide occurs in the effluent from absorber exit conduit 24. As anticipated, this increase will be from under 2 ppm to about 250 ppm in less than about 3 minutes.

When sulphur dioxide "break through" is detected, oxidized tail-gas from incinerator 10 is directed into a second vessel which then becomes absorber 12. In a preferred mode of operation, if sulphur dioxide breakthrough is detected during one absorption cycle, the duration of succeeding cycles is reduced by about 5% from the original absorption time, such that regeneration at the succeeding cycles is initiated before SO$_2$ breakthrough occurs. Original absorber 12 now containing the sulphur oxide loaded oxide-capturing absorbent is now transformed into regenerator 14 by closing off the tail-gas flow from incinerator 10 and directing hydrogen into the regenerator via hydrogen conduit 28. During the regeneration of the absorbent the temperature is maintained between about 900°F (482°C) to about 1,400°F (760°C), preferably about 1,100°F (593°C) to'about 1,300°F (704°C).

During the regeneration, a reducing gas, preferably hydrogen, is directed into regenerator 14 in about 0.10 to about 10 vol %, preferably about 2 to about 4 vol %.

Pressure in the regenerator is maintained at about 0.10 to about 10 atmospheres (10 to 1000 Kpa), preferably about 0.5 to about 3 atmospheres (50 to 300 Kpa). The gas hourly space velocity (GHSV) is about 10 to about 1,000, preferably 100 to about 150.

While the operating parameters for the regenerator are equally applicable to both the fluidized and the fixed bed processes, initially a GHSV of about 300 should be used when commencing regeneration of the fixed bed absorbent so that a higher concentration of liberated gases can be removed from the regenerator. As regeneration proceeds, the GHSV can be reduced to about 50 as the concentration of liberated gases diminishes.

Similarly, although hydrogen is the preferred reducing gas, other hydrocarbon reducing gases can be used.

These will preferably comprise C$_1$ through C$_5$ hydrocarbons. Substantially improved regeneration results are anticipated when water is co-fed into the regenerator along with the hydrocarbons. Once regeneration is completed, liberated sulphur dioxide, hydrogen sulphide, and water are removed from regenerator 14 via regenerator effluent conduit 32 and directed into Claus plant 16 for further treatment.

Whether operating under the fluidized or fixed bed method, it is preferred to operate absorber 12 at a temperature from about 900°F (482°C) to about 1,400°F (760°C). A temperature of from about 1,100°F (593°C) to about 1,300 °F (704°C) is most preferred. Oxygen should be introduced into absorber 12 in an amount of from about 0.10 to about 10 vol %;

2 to about 4 vol % is preferred. GHSV within absorber 12 should be maintained at a pressure of from about 500 to about 20,000 GHSV, 3,000 to about 5,000 GHSV is preferred. An additional benefit of operating absorber 12 within these parameters is that any carbon monoxide therein is converted into carbon dioxide which is released into the environment.

Other gases released from absorber 12 include nitrogen, oxygen, and trace amounts of sulphur dioxide along with water.

Operating conditions for incinerator 10 are similar when using either the fluidized or fixed bed method.

Preferably, the temperature is maintained at from about 900°F (482°C) to about 1,400°F (760°C), most preferably between about 1,100°F (593°C) to about 1,300°F (704°C).

Oxygen is introduced into the absorber in an amount of from about 0.1 to about 10 vol%, preferably 2 to about 4 vol%. Pressure in the absorber should be maintained at about 0.1 to about 10 atmospheres (10 to 1000 Kpa), preferably about 1.5 to about 3 atmospheres (150 to 300 Kpa). The GHSV should be maintained at about 400 to about 7,000, preferably about 500 to about 2,500. In those situations where it is required fuel gas can be introduced into incinerator 12 via fuel gas conduit 38 as shown in Figure 2.

Absorbents which can be utilized preferably comprise substantially alumina, and most preferably alumina compounded with magnesia, for best results. γ-alumina, χ-η-ρ-alumina, δ-alumina, and θ-alumina are particularly useful as adsorbents and supports because of their high surface areas.

The term "adsorbent" is used interchangeably herein with the term "absorbent." While a-alumina and Balumina can be used as adsorbents, they are not as effective as γ-alumina, χ-n-p-alumina, δ-alumina, or θ alumina. One or more oxides of other metals can also be used as adsorbents, either alone or in combination with alumina or as spinels, such as bismuth, manganese, yttrium, antimony, tin, copper, Group Ia metals, Group 2a metals, rare earth metals, and combinations thereof.

Magnesium aluminate spinels are particularly useful as adsorbers. Lanthanum and cerium are preferred rare earth metals. Naturally occurring rare earths, such as in the form of baestenite, are also useful adsorbers.

Elemental copper or copper compound adsorbers, such as copper oxide adsorbers, can also be used. The copper oxide can be cuprous oxide (Cu$_2$O) and/or cupric oxide (CuO). Other copper compounds can be used, such as copper (II) sulphate, copper (II) acetate, copper (II) formate, copper (II) nitrate and/or copper (II) chloride. The adsorbers can also be a blend/mxture of high density and low density materials, such as of the above-identified metal oxides.

The metal or metal oxide part of the adsorbers can be supported, carried and held on a refractory support or carrier material which also provides part of the adsorbers. The support controls the attrition and surface area characteristics of the adsorbers. The support preferably has a surface area greater than about 10 $m^2/g$ and most preferably from about 50 $m^2/g$ to about 500 $m^2/g$ for best results. Suitable supporters include, but are not limited to, silica, alumina, kaolin or other clays, diatomaceous earth, boria, and/or mullite. The support can comprise the same material as the metal or metal oxide part of the adsorbers.

The adsorbers can be impregnated or otherwise coated with an oxidizing catalyst or promoter that promotes the removal of nitrogen oxides and the oxidation of $SO_2$ to $SO_3$ in the presence of oxygen. It is believed that $SO_3$ is more readily adsorbed than $SO_2$. One useful catalyst is ceria (cerium oxide). Another useful catalyst is platinum.

Other catalytic metals, both free and in a combined form, preferably as an oxide form, can be used, either alone or in combination with each other or in combination with ceria and/or alumina, such as rare earth metals, metals from Group 8 of the Periodic Table, chromium, vanadium, rhenium, tungsten, silver, and combinations thereof. The promoter can comprise the same material as the adsorber. An even distribution of the promoter is preferred for best results and to minimize adsorbent erosion.

The Group Ia metals, Group 2a metals, and Group 8 metals referred to are those listed in the Periodic Table of the Elements in the Handbook of Chemistry and Physics (54th Edition). Useful Group Ia metals include lithium, sodium, potassium, rubidium, and cesium.

Useful Group 2a metals include magnesium, calcium, strontium, and barium. Useful Group 8 metals are the Group 8 noble metals (the platinum family of metals) including ruthenium, rhodium, palladium, osmium, iridium, and platinum. The rare earth metals are also useful and are referred to as the lanthanides. Suitable rare earth metals include cerium, praeseodymium, neodymium, samarium, europium, gadolinium, terbium, dysprosium, holmium, erbium, thulium, ytterbium, and lutetium.

The above-mentioned adsorbents are discussed in US-A-4692318. Although the adsorbents mentioned above are exemplary of the ones which can be used in the process to remove sulphur dioxide, the preferred absorbents are detailed in Examples 1 through 4 below.

Spent absorbent from absorber 12 which has been directed into regenerator 14 is subjected to temperatures from about 900°F (482°C) to about 1,300°F (704°C). Also, a hydrocarbon or hydrogen reducing gas is directed into regenerator 14 via hydrogen conduit 28.

The conditions are such in the regenerator so as to cause substantially hydrogen sulphide and sulphur dioxide to be released from the solid absorbent as an off-gas. Regenerated solid absorbent is removed from regenerator 14 when operated in the moving bed mode via regenerated absorbent conduit 30. Conduit 30 directs the regenerated absorbent back into absorber 12. The solid absorbent can also be regenerated and reconstituted in the presence of water so as to further enhance its activity for the adsorption of sulphur oxides. Under the preferred conditions, sulphur is released from the adsorbent primarily in the form of sulphur dioxide in an amount of from about 80 to about 90 weight % during the regeneration or desorption step.

Trace amounts of hydrogen sulphide also appear in the gases which are released from the absorbent doing regeneration or desorption. Off-gases which are emitted from the absorbent in regenerator 14 are removed therefrom via regenerator effluent conduit 32 where it proceeds into a Claus sulphur recovery process or plant 16 where elemental sulphur is recovered.

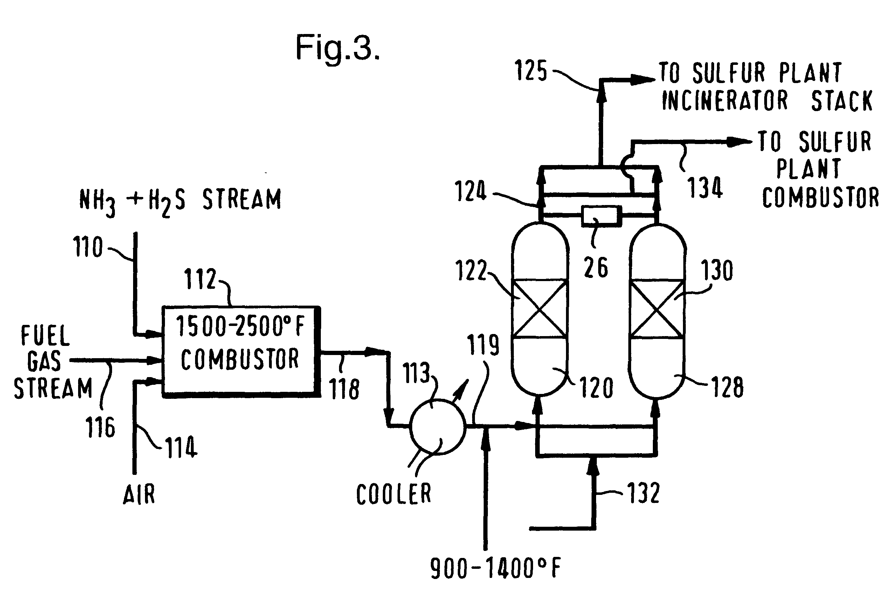

Referring to Fig. 3 an ammonia acid gas stream 110 containing hydrogen sulphide is fed to a relatively small combustion furnace 112. An air stream 114 and a fuel gas stream 116 are also fed to the combustion furnace 112 at rates sufficient to maintain the temperature in the furnace 112 within the range of 1500°F (815°C) to 2500°F (1371°C), and to maintain an atmosphere for stoichiometric combustion such that ammonia destruction is maximized and the ammonia is thus completely dissociated into $N_2$ and $H_2$. The $H_2$ will burn to produce water, while the $N_2$ remains as an inert gas.

Concurrently, the hydrogen sulphide is completely converted to sulphur oxides ($SO_x$). A nitrogen and sulphur oxide enriched gas stream 118 from the furnace 112 is cooled in a heat exchanger 113 to within a range of from about 900°F (482°C) to about 1400°F (760°C), and fed by line 119 to a first fixed-bed reactor 120 containing a solid absorbent bed 122.

The solid absorbent bed 122 absorbs substantially all of the sulphur oxide from the nitrogen and sulphur oxide enriched gas stream 118, and provides a nitrogen bearing gas stream through outlet conduit 124. The nitrogen bearing stream is fed through a valve system (not shown) to a line 125 leading to an incinerator or to a stack.

While in an absorbent mode, the reactor 120 is operated at a temperature from about 900°F (482°C) to about 1,400°F (760°C). A temperature of from about 1,100°F (593°C) to about 1,300°F (704°C) is preferred.

The oxygen content of the stream 119 entering the absorbent bed 122 is in an amount of from about 0.10 to about 10 vol%, 2 to about 4 vol% is preferred. Pressure within the reactor 120 should be maintained at a pressure of from about 0.1 to about 10 atmospheres (10 to 1000 Kpa), preferably from about 1.5 to about 3.0 atmospheres (150 to 300 Kpa). GHSV should be from about 500 to about 20,000, and preferably from about 3,000 to about 5,000 GHSV. An additional benefit of operating the reactor 122 during the absorbent mode within these parameters is that any carbon monoxide therein is converted into carbon dioxide which is released into the environment. Other gases released from the reactor 120 include nitrogen, oxygen, and trace amounts of sulphur dioxide along with water.

When the combustor 112 is operated stoichiometrically as it is preferred to maximize ammonia destruction, air or oxygen must be added to maintain the oxygen content of the stream 119 as discussed above. However, it is contemplated that the combustor 112 may be operated with excess oxygen supplied by the air stream 114. In this latter case, air or oxygen may not have to be added to the feed stream 119 to the reactor 120.

The absorbent can be in the form of balls, pebbles, spheres, extrudates, channelled monoliths, microspheres or pellets. This sulphur oxide-capturing absorbent provides absorbers or acceptors which absorb, and collect, or otherwise remove sulphur oxides from the influent gaseous stream. In one embodiment, the bed 122 is Mg/Al spinels.

The outlet conduit 124 is monitored by a sensor 126 until sulphur dioxide break-through occurs. A suitable sensor is a Siemens Ultramat 22P infrared analyzer. Of course, as will be understood by those skilled in the art, other comparable analyzing equipment can be used.

Sulphur dioxide break-through occurs when a substantial increase in the concentration of sulphur dioxide occurs in the conduit 124. This increase will be in the order of from about 3 ppm to about 250 ppm in less than about 2 minutes.

When sulphur dioxide break-through is detected, the nitrogen and sulphur oxide enriched gas stream 118 is directed through a suitable valve system (not shown) into a second fixed-bed reactor 128 having a solid absorbent bed 130 therein. Concurrently, the valve system directs a $H_2$ rich stream 32 to the first reactor 120 for regenerating the first absorbent bed 122. The $H_2$ rich stream 132 may contain $H_2$ and/or hydrocarbons.

During regeneration of the absorbent bed 122 the temperature is maintained between about 900°F (482°C) to about 1,400°F (760°C); and, the pressure in the reactor 120 is maintained at about 0.10 to about 10 atmospheres (10 to 1000 Kpa), preferably about 0.5 to about 3 atmospheres (150 to 300 Kpa). The $H_2$ and/or hydrocarbon stream 132 is directed into the reactor 120 at a gas hourly space velocity (GHSV) of about 10 to about 1,000,preferably about 100 to about 150. Initially, a GHSV of about 300 is preferred when commencing regeneration of a fixed-bed absorbent so that a higher concentration of liberated gases can be removed from the regenerator. As regeneration proceeds, the GHSV can be reduced to about 50 as the concentration of liberated gases diminishes. Similarly, although hydrogen is the preferred reducing gas for regeneration, other hydrocarbon reducing gases can be used. These will preferably comprise $C_1$ through $C_5$ hydrocarbons.

Substantially improved regeneration results are anticipated when water is co-fed into the reactor along with the hydrocarbons. The $H_2$ and/or hydrocarbon stream 132 may contain 0.0 to 50% water.

Regeneration of the bed 122 provides a hydrogen sulphide and/or sulphur dioxide bearing stream through the outlet conduit 124, the valve system (not shown), and via line 134 to the sulphur plant for recovery of sulphur. The hydrogen sulphide and/or sulphur dioxide bearing stream may also contain water and unconverted reducing gas. The nitrogen and sulphur oxide enriched stream 118 and the hydrogen and/or hydrocarbon bearing stream 132 are alternately fed to each one of the reactors 120,128, whereby each bed 122,130 is first spent by sulphur oxides extracted from the stream 118, and then regenerated by the hydrogen and/or hydrocarbon bearing stream 132.

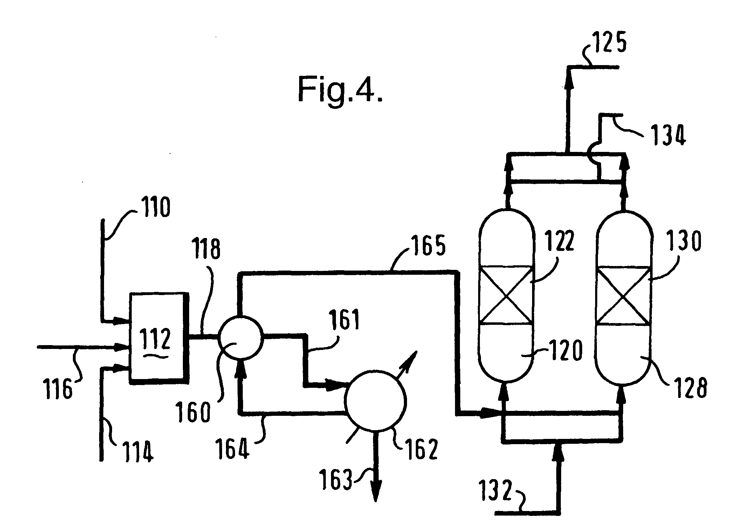

With reference to Fig. 4, there is shown a modification of the system of Fig. 3 for extracting sulphur from the nitrogen and sulphur oxide enriched stream 118 before the stream 118 is fed to one of the reactors 120,128. Specifically, the enriched stream 118 is passed through a heat exchanger 160, line 161 to a cooler/condenser 162 where the nitrogen and sulphur oxide enriched stream 118 is cooled to from about 250°F (121°C) to about 300°F (149°C) to allow elemental sulphur to condense out as a liquid sulphur stream 163.

The remainder of the enriched stream is looped back through the heat exchanger 160 via line 164 to reheat the enriched stream to within the range of from about 900°F (482°C) to about 1400°F (760°C), and preferably from about 1,100°F (593°C) to about 1,300°F (704°C), for input by line 165 to one of the reactors 122,130. If there is stoichiometric combustion in the combustor 112, this cooling and reheating loop may extract from about 10% to about 60% of the sulphur content of the combustor output stream 118. The remaining elements of Fig. 4 function in the same manner as identically numbered elements of Fig. 3 described hereinabove.

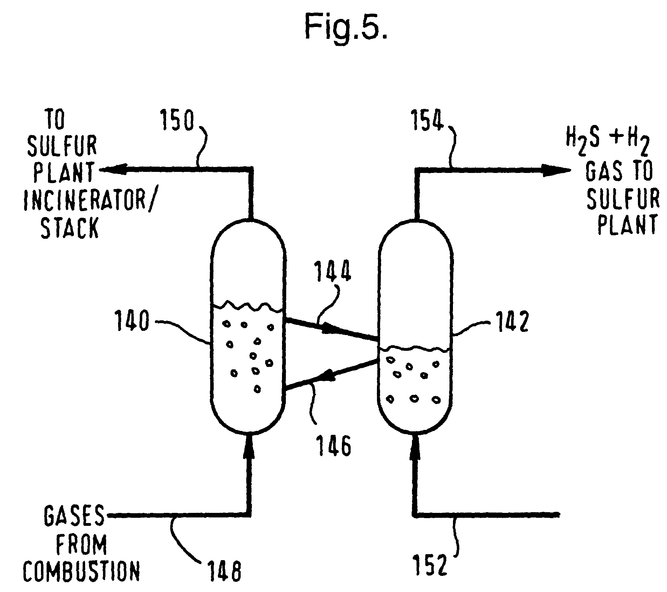

With reference to Fig. 5, there is shown a fluidized bed system comprising a reactor 140, a regenerator 142, a conduit 144 for feeding spent absorbent from the reactor to the regenerator 142, and another conduit for passing a fluidized bed of regenerated absorbent from the regenerator 142 to the reactor 140. A nitrogen and sulphur oxide enriched stream 148 from the combustor 112 (Fig. 3) is fed to the lower end of the reactor 140, over absorbent therein to strip out the sulphur oxides and provide a nitrogen enriched stream 150 for the incinerator or the stack.

A hydrogen bearing stream 152 is fed to the bottom of the regenerator 142 to reduce the sulphur compounds on the spent absorbent to hydrogen sulphide and form a hydrogen sulphide and/or sulphur dioxide bearing outlet stream 150.

Operating parameters for the fluidized system are substantially the same as those described above with respect to the Figs. 3 or 4 fixed-bed embodiments.

Further, the operating conditions for the combustor 112 are similar when using either the fluidized or fixed bed systems. The temperature in the fluidized bed reactor 140 is maintained at from about 900°F (482°C) to about 1,400°F (760°C), preferably between about 1,100°F (593°C) to about 1,300°F (704°C). The oxygen content of the stream 148 introduced into the reactor 140 is maintained in an amount of from about 0.1 to about 10 vol %, preferably 2 to about 4 vol %. Pressure in the reactor 140 should be maintained at about 0.1 to about 10 atmospheres (10 to 1000 Kpa), preferably about 1.5 to about 3 atmospheres (150 to 300 Kpa). The GHSV should be maintained at about 400 to about 7,000, preferably about 500 to about 2,500.

The following discussed absorbents are described in US-A-4692318. Absorbents which can be used preferably comprise substantially alumina, and most preferably alumina compounded with magnesia, for best results. $\gamma$-alumina, $\chi$-$\eta$-$\rho$-alumina, $\delta$-alumina, and $\theta$-alumina are particularly useful as adsorbents and supports because of their high surface areas.

The term "adsorbent" is used interchangeably herein with the term "absorbent." While $\alpha$-alumina and $\beta$-alumina can be used as adsorbents, they are not as effective as $\gamma$-alumina, $\chi$-$\eta$-$\rho$-alumina, $\delta$-alumina, and $\theta$-alumina. One or more oxides of other metals can also be used as adsorbents, either alone or in combination with alumina or as spinels, such as bismuth, manganese, yttrium, antimony, tin, copper, Group Ia metals, Group 2a metals, rare earth metals, and combinations thereof. Magnesium aluminate spinels are particularly useful as absorbers.

Lanthanum and cerium are preferred rare earth metals.

Naturally occurring rare earths, such as in the form of baestenite, are also useful absorbers. Elemental copper or copper compound absorbers, such as copper oxide absorbers, can also be used. The copper oxide can be cuprous oxide and/or cupric oxide. Other copper compounds can be used, such as copper (II) sulphate, copper (II) acetate, copper (II) formate, copper (II) nitrate and/or copper (II) chloride. The absorbers can also be a blend/mixture of high density and low density materials.

The metal or metal oxide part of the absorbers can be supported, carried and held on a refractory support or carrier material which also provides part of the absorbers. The support controls the attrition and surface area characteristics of the absorbers. The support preferably has a surface area greater than about 10 $m^2$/g and most preferably from about 50 $m^2$/g to about 500 $m^2$/g for best results. Suitable supporters include, but are not limited to, silica, alumina, kaolin or other clays, diatomaceous earth, boria, and/or mullite. The support can comprise the same material as the metal or metal oxide part of the absorbers.

The absorbers can be impregnated or otherwise coated with an oxidizing catalyst or promoter that promotes the removal of sulphur oxides and/or nitrogen oxides. One useful catalyst is ceria (cerium oxide).

Another useful catalyst is platinum. Other catalytic metals, both free and in combined form, preferably as an oxide form, can be used, either alone or in combination with each other or in combination with ceria and/or alumina, such as rare earth metals, metals from Group 8 of the Periodic Table, chromium, vanadium, rhenium, tungsten, silver and combinations thereof. The promoter can comprise the same material as the absorber. An even distribution of the promoter is preferred for best results and to minimize adsorbent erosion.

The Group Ia metals, Group 2a metals, and Group 8 metals referred to are those listed in the Periodic Table of the Elements in the Handbook of Chemistry and Physics (54th Edition). Useful Group Ia metals include lithium, sodium, potassium, rubidium, and cesium.

Useful Group 2a metals include magnesium, calcium, strontium, and barium. Useful Group 8 metals are the Group 8 noble metals (the platinum family of metals) including ruthenium, rhodium, palladium, osmium, iridium, and platinum The rare earth metals are also useful and are referred to as the lanthanides. Suitable rare earth metals include cerium, praseodymium, neodymium, samarium, europium, gadolinium, terbium, dysprosium, holmium, erbium, thulium, ytterbium, and lutetium.

Other absorbents useful in the practice of the present invention are the metal containing spinels disclosed in US-A- 4790982. One absorbent in US-A 4790982 that is particularly suitable for use in the instant invention is the magnesium, aluminum-containing spinel impregnated with 2% vanadium and 108 cerium shown in Example 10 of the patent.

The following examples are illustrative of sorbents suitable for use in the reactor beds of both the above embodiments of the present invention.

EXAMPLE 1

A ceria/alumina sorbent was prepared by impregnating high pore value $\gamma$-alumina (1/8" (0.32cm) extrudate from Dycat International) with a solution of 32.7 grams $Ce(NO_3)6.6H_2O$ from Aldrich Chemical Company in 45 grams of water, using an incipient wetness technique. The material was dried for three hours at 120°C (248°F) and calcined one hour at 700°C (1,292°F), in air. The composition was approximately 11 % $CeO_2/Al_2O_3$. This material was crushed and sieved to 14/60 mesh (API).

EXAMPLE 2

A magnesium aluminate sorbent was prepared, starting with two solutions. Solution I contained 461.5 grams magnesium nitrate, 68.6 grams of concentrated nitric acid, and 500 ml of water. Solution II contained 209.7 grams sodium aluminate, 10.7 grams sodium hydroxide, and 500 ml of water. To solution I were added 2 liters of water, and then over a 30 minute period, Solution II. Sodium hydroxide was then added in an amount to bring the pH up to 10.7. The resulting mixture was aged for 16 hours and then filtered. The recovered solids were dried at 170 C (338 cm) for 12 hours and sized to 14/60 mesh (API). This material had a composition of about $Mg_2 Al_2 O_5$.

EXAMPLE 3

To make a sorbent with approximately 100 ppm platinum loading, 35 grams of the magnesium aluminate from Example 2 was impregnated using an incipient wetness technique with a solution of 0.013 gram of chloroplatinic acid (37% Pt. assay) in 16 ml of water.
The resulting solids were calcined in air at 450°C (810°F) for three hours and sized to 14/60 mesh (API).

EXAMPLE 4

A sorbent with approximately 10% ceria loading on magnesium aluminate was prepared by adding a solution of 9.71 grams cerium nitrate in 16 ml of water to 35 grams of magnesium aluminate from Example 1, using an incipient wetness method. The material was then dried for three hours at 120°C (248°F), calcined in air one hour at 700°C (1,292°F), and sized to 14/60 mesh (API).
To test the sorbents' ability to sorb sulphur oxides from a gas mixture simulating an incinerated Claus tail-gas, 6 grams of each material described in Examples 1-4 were loaded in an 11mm I.D. quartz reactor with a central thermowell. The reactor was placed in a radiant furnace for rapid heating and cooling. A gas flow of 360 $cm^3$/minute with a composition of 1 % sulphur dioxide, 4% oxygen, and 95% nitrogen (on a dry basis) was established through the reactor, after the desired sorption temperature was attained. Water, in the amount of about 20% of the gas flow, as added by directing part of the feed gases through a saturator held at about 150°F (66°C).
The sulphur dioxide content in the effluent stream was monitored with a Siemens Ultramat 22P infrared analyzer. A cold trap between the reactor and the analyzer removed most of the water on the effluent stream. Sorption experiments were terminated when the sulphur dioxide level in the effluent exceeded 250 ppm.
Sulphur dioxide breakthrough was relatively sharp. In general, the analyzer detected no sulphur dioxide for the first 80-90% of the sorption period. Sulphur dioxide concentration of less than 2 ppm during this portion of the sorption was confirmed by measurements with Drager gas measurement tubes. The calculated weight percentage uptake of sulphur oxide as $SO_3$ during the sorption period is reported in the Table below.
Regeneration of the solid sorbent was accomplished by contacting it with hydrogen, which was bubbled through a saturator to obtain about 25% water vapor content. The composition of the off-gas during reductive regeneration was determined by injections on to a Hewlett-Packard 5890 gas chromatograph equipped with a thermal conductivity detector. Usually, both hydrogen sulphide and Sulphur dioxide could be detected in the off-gas, but typically one gas or the other dominated, depending on the sorbent and on operating conditions, as indicated in the following Table.

TABLE

| Sorbent Material Identity | Temp (°F) of sorption & Regeneration | wt% Uptake During Sorption | Dominant Compound Off-gas* |
|---|---|---|---|
| $CeO_2/Al_2O_3$(Ex. 1) | 1,000 (538°C) | 4.8 | $H_2S$ |
| $CeO_2/Al_2O_3$ | 1,200 (649°C) | 6.2 | $SO_2$ |
| $Mg_2Al_2O_5$(Ex. 2) | 1,200 (649°C) | 4.7 | $H_2S$ |
| $Pt/Mg_2Al_2O_5$(Ex. 3) | 1,200 (649°C) | 33.8 | $SO_2$ |
| $CeO_2/Mg_2Al_2O_5$ (Ex. 4) | 1,000 (538°C) | 14.7 | $H_2S$ |
| $CeO_2/Mg_2Al_2O_5$ | 1,200 (649°C) | 25.2 | $SO_2$ |

* i.e. off gas from regeneration

The uptake of $SO_X$ was greater for $Mg_2Al_2O_5$ promoted with Pt (Ex.3) and with $CeO_2$ (Ex.4) was higher than for $Mg_2Al_2O_5$ alone (Ex.2). For the ceria-promoted materials of Examples 1 and 4, magnesium aluminate was a more effective sorbent than alumina, and increasing the operating temperatures from 1000°F (538°C) to 1200°F (649°C) (Ex.I), and from 1100°F (593°C) to 1200°F (649°C) (Ex.4) increased $SO_X$ sorption which shifted the dominant off-gas sulphur species from $H_2S$ to $SO_2$.

EXAMPLE 5

The carbon monoxide oxidation activity of two sorbents was tested by flowing a mixture of 4% carbon monoxide, 4% oxygen, and 8% carbon dioxide at a flow rate of 310 cm$^3$/min over 6 grams of each material in an 11 mm I. D. quartz reactor. Carbon monoxide and carbon dioxide concentration, as a function of reactor temperature, were monitored by Beckman Model 864 infrared analyzers. With the magnesium aluminate of Example 2, carbon monoxide was half converted at about 770°F (410°C) and substantially all converted at 860°F (460°C). With the platinum-promoted magnesium aluminate of Example 3, carbon monoxide was half converted at about 510°F (266°C) and substantially all converted at 540°F (282°C). With an empty reactor, there was no detectable carbon monoxide conversion for temperatures up to 1,200°F (649°C).
This example demonstrates that the designated sorbents are effective in promoting the removal of carbon monoxide in the presence of oxygen.

**Claims**

1. A method of removing sulphur from a gas stream containing at least one sulphur compound, comprising the steps of:

   (a) combusting said gas stream with an oxygen containing gas in an incinerator to convert the or each sulphur compound to at least one sulphur oxide;
   (b) withdrawing from the incinerator a gas stream containing the or each sulphur oxide, and directing said sulphur oxide containing gas stream to an absorber having an absorbent bed adapted to remove sulphur compounds;
   (c) contacting said absorbent bed with a hydrogen and/or hydrocarbon containing stream to regenerate said absorbent bed by reducing the sulphur compounds absorbed in said absorbent bed to hydrogen sulphide and/ or sulphur dioxide, and thereby forming an off gas stream containing hydrogen sulphide and/or sulphur dioxide; and,
   (d) recovering sulphur from said hydrogen sulphide and/or sulphur dioxide bearing stream.

2. A method according to claim 1, wherein said absorbent bed is provided in at least two fixed-bed reactors, and sulphur oxide containing gas stream from the incinerator is fed to a first one of said reactors until the bed therein is spent absorbed sulphur compounds;

   thereafter said sulphur oxide containing gas stream is fed to a second one of said reactors; and,
   said hydrogen and/or hydrocarbon bearing gas stream is fed to said first one of said reactors to form said off gas stream and thus regenerate said first one of said reactors.

3. A method according to claim 2, wherein said sulphur oxide containing gas stream and said hydrogen and/or hydrocarbon bearing gas stream are alternately fed to each one of said reactors, whereby each bed is first spent with said absorbed sulphur compounds, and then regenerated by said hydrogen and/or hydrocarbon bearing stream to form said off gas stream.

4. A method according to claim 1, wherein said absorbent bed is in a fluidized bed system comprising a reactor, a regenerator, a conduit for feeding spent absorbent from the reactor to the regenerator, and another conduit for passing regenerated absorbent from the regenerator to the reactor; and,
   wherein said sulphur oxide containing gas stream from the incinerator is fed to the reactor to absorb said sulphur oxide on the absorbent, and said hydrogen and/or hydrocarbon bearing stream is fed to the regenerator to reduce said absorbed sulphur compounds to said off gas stream.

5. A method according to claim 1, wherein said absorbent bed comprises a fixed bed solid absorbent.

6. A method according to claim 1, wherein said absorbent bed comprises a granulated moving bed solid absorbent.

7. A method according to claim 1, wherein said absorbent is a metal oxide, or a mixtures of metal oxides, impregnated with a promoter.

8. A method according to claim 7, wherein the metal oxide is alumina and the promoter is a rare earth.

9. A method according to claim 7, wherein said promoter is $CeO_2$ and/or Pt.

10. A method according to claim 1, wherein the solid absorbent is Mg/Al spinels.

11. A method according to claim 1, wherein the solid absorbent is magnesium-aluminum-containing spinel impregnated with vanadium and cerium.

12. A method according to claim 1, wherein the solid absorbent is magnesium aluminate impregnated with an oxygen promoter.

13. A method according to claim 1, wherein said off gas stream is directed to a Claus sulphur recovery process where the sulphur compounds are converted to elemental sulphur.

14. A method according to claim 13, wherein said absorber is operated at a temperature of substantially 900°F (482°C) to substantially 1,400°F (760°C).

15. A method according to claim 13, wherein the absorbent is reconstituted in the presence of water into a form which is active for further absorption of sulphur oxides.

16. A method according to claim 13, wherein said absorbent increases in weight from substantially 10 to substantially 60 wt. % due to absorbed sulphur oxides.

17. A method according to claim 13, wherein greater than 70 vol. % of sulphur in the off gas stream is in the form of sulphur dioxide.

18. A method according to claim 13, wherein the gas stream containing sulphur compounds which is fed to the incinerator contains carbon monoxide, and greater than substantially 90 vol. % of said carbon monoxide is converted to carbon dioxide.

19. A method according to claim 13, wherein said oxygen containing stream contains sufficient oxygen such that when it is introduced into the incinerator an oxygen content of substantially 0.10 to substantially 10 vol. % is maintained in gases issuing from the incinerator.

20. A method according to claim 13, wherein the pressure in said absorber is substantially 0.1 to substantially 10 atmospheres (10 to 1000kPa).

21. A method according to claim 13, wherein said absorber is operated at a temperature of from substantially 900°F (482°C) to substantially 1,400°F (760°C), a pressure of substantially 1 to substantially 2 atmospheres (100 to 200 kPa), and a GHSV (gas hourly space velocity) of substantially 500 to substantially 50,000.

22. A method according to claim 21, wherein the absorber is operated at a GHSV of substantially 2,000 to substantially 5,000, a pressure of substantially 1 to substantially 2 atmospheres (100 to 200 kPa), and a temperature of substantially 1,100 °F (593°C) to substantially 1,350°F (732°C)

23. A method according to claim 13, wherein the incinerator is operated at a temperature of substantially 900°F (482°C) to substantially 1,350°F (732°C), a pressure of substantially 1 atmosphere (100kPa), and a GHSV of substantially 2,000 to substantially 5,000.

24. A method according to claim 13, wherein said absorber is operated at a temperature of substantially 1,100°F (593°C) to substantially 1,300 F (704°C), a GHSV of substantially 2,000 to substantially 5,000, a pressure of substantially 0.5 to substantially 3 atmospheres (50 to 300 kPa), and oxygen in an amount of about 2 to about 5 vol % in the presence of a ceria/alumina absorbent.

**25.** A method according to claim 1, wherein:

said gas stream containing at least one sulphur compound which is fed to the incinerator is an ammonia acid gas stream;

in the incinerator the ammonia is combusted to form $N_2$ so that the gas stream withdrawn from the incinerator also contains $N_2$; and,

the gas stream fed to the absorbent bed leaves the said bed in the form of a nitrogen bearing stream.

**26.** A method according to claim 25, wherein said ammonia acid gas stream is combusted in the incinerator at a temperature of from substantially 1500°F (816°C) to substantially 2500°F (1371°C).

**27.** A method according to claim 25, wherein said ammonia acid gas stream is combusted with fuel gas.

**28.** A method according to claim 25, wherein said ammonia acid gas stream is stoichiometrically combusted.

**29.** A method according to claim 25, wherein an oxygen containing gas is added to said nitrogen and sulphur oxide containing gas stream withdrawn from the incinerator.

**30.** A method according to claim 25, wherein said ammonia acid gas stream is combusted with excess air or oxygen.

**31.** A method according to claim 25, wherein said nitrogen and sulphur oxide containing gas stream contacting said solid absorbent bed has an oxygen content of from substantially 0.10 vol% to substantially 10 vol%.

**32.** A method according to claim 31, wherein oxygen content is from substantially 2 vol% to substantially 4 vol%.

**33.** A method according to claim 1, wherein said absorbent bed while absorbing the sulphur oxides thereon is operated at a GHSV of from substantially 500 to substantially 20,000, a pressure of from substantially 0.1 atm to substantially 10 atm (10 to 1000kPa), and a temperature of from substantially 900°F (482°C) to substantially 1400°F (760°C).

**34.** A method according to claim 33, wherein said GHSV is from substantially 3,000 to substantially 5,000, said temperature is from about 1,100°F (593°C) to substantially 1,300°F (704°C), and said pressure is from substantially 1.5 to substantially 3.0 atm (150 to 300 kPa).

**35.** A method according to claim 25, wherein said absorbent bed while being regenerated is operated at a temperature of from substantially 900°F (482°C) to substantially 1,400°F (760°C), at a pressure of from substantially 0.10 to substantially 10 atm (10 to 1000kPa), and a GHSV of substantially 10 to substantially 1,000.

**36.** A method according to claim 35, wherein said temperature is from about 1,100°F (593°C) to about 1,300°F (704°C), said pressure is from substantially 0.5 atm to substantially 3.0 atm (50 to 300 kPa), and said GHSV is from substantially 100 to substantially 150.

**37.** A method according to claim 25, wherein said nitrogen and sulphur oxide containing stream withdrawn from the incinerator is passed through a heat exchanger and to a condenser for reducing the temperature of said enriched stream to from substantially 250°F (121°C) to substantially 300°F (149°C) to condense elemental sulphur out of said withdrawn stream as a liquid sulphur stream, thereafter said withdrawn stream being looped back through said heat exchanger to be reheated to from substantially 900°F (482°C) to substantially 1,400°F (760°C) for contacting said solid absorbent bed.

**38.** A method according to claim 25, wherein said ammonia acid gas stream is combusted in an oxidizing atmosphere.

**39.** A method according to claim 25, wherein said nitrogen bearing stream from said absorber is fed to an incinerator or is vented.

**40.** Apparatus for removing sulphur from a gas stream containing at least one sulphur compound, comprising:

(a) an incinerator for combusting said gas stream with an oxygen containing gas to convert the or each sulphur compound to at least one sulphur oxide;

(b) means for contacting a sulphur oxide containing gas withdrawn from the incinerator with an absorbent bed adapted to remove sulphur compounds from a sulphur oxide containing gas stream withdrawn from the incinerator;

(c) means for regenerating said absorbent bed by contacting it with a hydrogen and/or hydrocarbon containing stream, whereby the sulphur compounds absorbed in said absorbent bed are reduced to hydrogen sulphide and/or sulphur dioxide, thereby forming an off gas stream containing hydrogen sulphide and/or sulphur dioxide; and,

(d) means to recovering sulphur from said hydrogen sulphide and/or sulphur dioxide bearing stream.

41. Apparatus according to claim 40, wherein said means for recovering sulphur comprises a Claus sulphur recovery apparatus.

42. Apparatus according to claim 40, wherein the gas stream containing at least one sulphur compound is an ammonia acid gas stream, whereby $N_2$ is also formed in the incinerator, and the absorbent bed is adapted not to absorb the $N_2$ formed in the incinerator.

43. Apparatus according to claim 42, wherein said combusting means operates at a temperature of from substantially 1500°F (816°C) to substantially 2500°F (1371°C)

44. Apparatus according to claim 42, further comprising means for supplying fuel gas to said combusting means.

45. Apparatus according to claim 42, wherein the contacting means and the regenerating means comprises at least two fixed-bed reactors, each bed being formed of said absorbent; and,

further comprising switching means (1) for feeding said sulphur oxide containing gas stream withdrawn from the incinerator to a first one of said reactors until the bed therein is spent with absorbed sulphur compounds, and thereafter (2) for feeding said sulphur oxide containing gas stream to a second one of said reactors while feeding said hydrogen and/or hydrocarbon bearing gas stream to said first one of said reactors to form said off gas stream and thus regenerate said first one of said reactors.

46. Apparatus according to claim 42, wherein said contacting means comprises a reactor, and said absorbent bed regeneration means comprises a regenerator; and,

further comprising means for continuously feeding a fluidized bed of spent absorbent from the reactor to the regenerator, and for passing a fluidized bed of regenerated absorbent from the regenerator to the reactor; whereby said sulphur oxide containing gas stream from the incinerator is fed to said absorbent in the reactor for absorbing said sulphur oxide, and means for feeding said hydrogen and/or hydrocarbon bearing stream to the regenerator to reduce absorbed sulphur compounds to hydrogen sulphide and/or sulphur dioxide, and thus form said off gas stream.

Fig.1.

Fig.2.

Fig.3.

Fig.4.

# Fig.5.

TO SULFUR PLANT INCINERATOR/ STACK

150

154

H$_2$S + H$_2$ GAS TO SULFUR PLANT

144

140

142

146

GASES FROM COMBUSTION

148

152

**European Patent Office**

**EUROPEAN SEARCH REPORT**

Application Number

EP 01 11 1956

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 832 445 A (KOUWENOVEN ET AL.) 27 August 1974 (1974-08-27) * the whole document * | 1-7, 13-46 | C01B17/00 C01B17/02 C01B17/16 C01C3/00 B01J8/00 C01B17/04 |
| Y |  | 8-12 | |
| D,Y | US 4 692 318 A (TOLPIN ET AL.) 8 September 1987 (1987-09-08) * the whole document * | 8-12 | |
| Y | US 4 836 993 A (BERTOLACINI ET AL.) 6 June 1989 (1989-06-06) * the whole document * | 8-12 | |
| X | EP 0 215 709 A (INSTITUT FRANCAIS DU PETROLE) 25 March 1987 (1987-03-25) * the whole document * | 40,41 | |
| A |  | 1,4-24 | |

TECHNICAL FIELDS SEARCHED (Int.Cl.7)

C01B
B01D

The present search report has been drawn up for all claims

| Place of search | Date of completion of the search | Examiner |
|---|---|---|
| THE HAGUE | 1 October 2001 | Zalm, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 11 1956

This annex lists the patent family members relating to the patent documents cited in the above–mentioned European search report.
The members are as contained in the European Patent Office EDP file on
The European Patent Office is in no way liable for these particulars which are merely given for the purpose of information.

01-10-2001

| Patent document cited in search report | | Publication date | Patent family member(s) | | Publication date |
|---|---|---|---|---|---|
| US 3832445 | A | 27-08-1974 | NL | 6410671 A | 15-03-1966 |
| | | | BE | 669532 A | 14-03-1966 |
| | | | CH | 493262 A | 15-07-1970 |
| | | | CH | 446276 A | 15-11-1967 |
| | | | DE | 1594687 A1 | 29-04-1971 |
| | | | DK | 113008 B | 10-02-1969 |
| | | | FR | 1448396 A | 04-11-1966 |
| | | | GB | 1089716 A | 08-11-1967 |
| | | | JP | 49017951 B | 07-05-1974 |
| | | | SE | 317358 B | 17-11-1969 |
| US 4692318 | A | 08-09-1987 | US | 4609537 A | 02-09-1986 |
| | | | CA | 1235882 A1 | 03-05-1988 |
| | | | EP | 0174109 A2 | 12-03-1986 |
| | | | JP | 61064319 A | 02-04-1986 |
| US 4836993 | A | 06-06-1989 | NONE | | |
| EP 0215709 | A | 25-03-1987 | FR | 2587236 A1 | 20-03-1987 |
| | | | CA | 1288215 A1 | 03-09-1991 |
| | | | DE | 3664727 D1 | 07-09-1989 |
| | | | EP | 0215709 A1 | 25-03-1987 |
| | | | JP | 2050768 C | 10-05-1996 |
| | | | JP | 7071616 B | 02-08-1995 |
| | | | JP | 62068527 A | 28-03-1987 |
| | | | US | 4725417 A | 16-02-1988 |

EPO FORM P0459

For more details about this annex : see Official Journal of the European Patent Office, No. 12/82